# EUROPÄISCHE PATENTSCHRIFT

(11) **EP 0 681 930 B1**
(45) Veröffentlichungstag und Bekanntmachung des Hinweises auf die Patenterteilung: **03.03.1999**
(21) Anmeldenummer: 95106770.1
(22) Anmeldetag: 05.05.1995
(51) Int. Cl.: B60C 11/11, B60C 11/13

(54) **Laufflächenprofil**
Tread profile
Profil de bande de roulement

(30) Priorität: 10.05.1994 DE 4416435
(43) Veröffentlichungstag der Anmeldung: 15.11.1995
(73) Patentinhaber: Uniroyal Englebert Reifen GmbH, D-52068 Aachen (DE)
(72) Erfinder: Poqué, Dionysius Josef, D-52076 Aachen (DE); Baumhöfer, Johannes Josef, D-52080 Aachen (DE); Jansen, Michael, D-52525 Heiusberg (DE); Stump, Hermann, D-52249 Eschweiler (DE)
(74) Vertreter: Schneider, Egon

(56) Entgegenhaltungen:
- EP-A- 0 075 760
- EP-A- 0 112 533
- EP-A- 0 354 718
- EP-A- 0 393 012
- EP-A- 0 544 236
- DE-A- 4 000 339
- GB-A- 2 046 188
- US-A- 4 796 683
- PATENT ABSTRACTS OF JAPAN vol. 13 no. 542 (M-901) ,5.Dezember 1989 & JP-A-01 223006 (OHTSU TIRE&RUBBER CO. LTD.) 6.September 1989,

## Beschreibung

Die Erfindung betrifft ein Laufflächenprofil eines Fahrzeugreifens mit benachbarten Profilblockreihen, die durch eine Umfangsrille voneinander getrennt sind. Für die Eignung eines Reifens für den Wintereinsatz ist eine ausgeprägte Grobstolligkeit und dadurch verbunden ausgeprägte Querkanten für die Eignung zur Traktion auf Schnee gewünscht. Dementsprechend sind spezielle Winterreifen mit besonders grobstolligen Blockreihen bekannt. Andererseits ist es bei speziellen Sommerreifen gewünscht, einen guten Naßgriff und damit verbunden eine optimale Abführung des Wassers zu ermöglichen. Hierzu ist es bekannt, zwischen Profilblockreihen in Umfangsrichtung verlaufende Umfangsrillen anzuordnen. Solche Sommerreifen haben üblicherweise weniger grob ausgebildete Stollen und weniger Querkanten und somit ein schlechteres Traktionsverhalten auf Schnee. Andererseits sind auch Reifen mit Umfangsrillen bekannt, deren Umfangsrillen über den Umfang verteilt komplett, d. h. sowohl mit ihren Seitenwänden als auch mit ihrem Rillengrund in axiale Richtungen geknickt verlaufen, wodurch zwar mehr Querkanten ermöglicht, jedoch der geradlinige und somit ein besonders schneller Wasserabtransport behindert wird.

Ein Laufflächenprofil gemäß dem Obergriff des Anspruchs 1 ist z.B. aus EP-A-0 393 012 bekannt.

Der Erfindung liegt das Problem zugrunde, ein Laufflächenprofil für Fahrzeugreifen zu schaffen, das den Anforderungen des konventionellen Sommerreifens, insbesondere hinsichtlich der Naßgriffeigenschaften, genügt und andererseits eine verbesserte Schneetraktion ermöglicht.

Das Problem wird erfindungsgemäß durch die Ausbildung des Laufflächenprofils gemäß den Merkmalen von Anspruch 1 gelöst. Die Ausbildung der Umfangsrille im Rillengrund in Umfangsrichtung ermöglicht eine gleichmäßige zielgerichtete schnelle Abführung des Wassers, wie sie bei herkömmlichen bekannten Sommerreifen mit geradem in Umfangsrichtung gerichtetem Rillengrund und geraden in Umfangsrichtung gerichteten Seitenwänden erreicht wird. Durch die axialen Versetzungen im radial äußeren Bereich der Umfangsrille wirken jedoch im Kontaktbereich zur Straßenoberfläche zusätzliche Querkanten zur verbesserten Traktion auf Schnee. Somit ist ein solcher Reifen ganzjährig einsetzbar mit gutem Naßgriff und Schneetraktionsverhalten.

Die erfindungsgemäße Ausbildung gemäß den Merkmalen von Anspruch 2 ermöglicht eine besonders gleichmäßige zuverlässige Traktion auf Schnee.

Die in Umfangsrichtung phasenversetzte Anordnung der Versetzungen der eine Umfangsrinne begrenzenden Seitenwände ermöglicht ein besonders zuverlässiges gleichmäßiges Traktionsverhalten und aufgrund der Reduzierung von Häufungen von Biegekanten auf einer axialen Linie die Reduzierung unerwünschter Schwingungen, wodurch sowohl eine Geräuschverminderung als auch ein ruhigerer Lauf von Reifen ermöglicht wird.

Die Ausbildung gemäß den Merkmalen von Anspruch 4 mit mehreren Umfangsrillen mit umfangsgerichtetem Rillengrund und mit axialem Versatz ausgebildeten Seitenwänden ermöglicht eine besonders zuverlässige Traktion über einen weiten axialen Bereich eines Reifens und verbesserte Nässeeigenschaften. Bevorzugt ist dabei die Ausbildung gemäß den Merkmalen von Anspruch 5.

Besonders einfach lassen sich derartige Umfangsrillen durch Einschluß eines Winkels α zwischen Rillenseitenwand und der Radialen in der axialen Schnittebene eines Reifens ermöglichen. Durch abschnittsweise Veränderungen des Winkels in Umfangsrichtung sind in einfacher Weise die gewünschten zusätzlichen Traktionskanten in der Seitenwand erzielbar. Der Winkel α ist vorteilhafterweise zwischen 5° und 15°, bevorzugt zwischen 8° und 12°.

Vorteilhafterweise sind beide Seitenwände derart ausgebildet, daß sie jeweils einen Winkel (α β) zwischen 5° und 15°, bevorzugt zwischen 8° und 12° zur Radialen einschließen. Zur Erhöhung der Blocksteifigkeit und somit der Traktion ist zumindest eine Umfangsrille axial außerhalb der Äquatorebene vorgesehen, wobei deren axial von der Äquatorebene wegweisende Seitenwand einen größeren Winkel als die näher zur Äquatorebene weisende Seitenwand mit der Radialen einschließt.

Die Merkmale von Anspruch 8 beschreiben eine weitere vorteilhafte Ausführungsform, bei der es beispielsweise möglich ist, die Seitenwand leicht gekrümmt mit einem Krümmungsradius, dessen Mittelpunkt im Bereich des Profilblockelements oder radial darunter angeordnet ist, auszubilden, wodurch der benachbarte Block versteift wird.

Durch ein ausgeglichenes Diagonalenverhältnis der Profilblockelemente einer Blockreihe kann diese besonders steif und somit hinsichtlich ihres Traktionsverhaltens besonders günstig ausgebildet werden. Besonders vorteilhaft ist die Ausbildung mit einer zentralen Mittenblockreihe mit hohem Diagonalenverhältnis zwischen 0,25 und 0,8, bevorzugt im wesentlichen 0,4, wobei die längere Ausdehnung einem Winkel kleiner 45° zur Umfangsrichtung aufweist und die somit im zentralen Bereich eine besonders starke Umfangssteifigkeit ermöglicht und der Geräuschreduktion dient. Diese ist beiderseits mit jeweils mindestens einer Blockreihe benachbart, deren Profilblockelemente jeweils mit im wesentlichen ausgeglichenem Diagonalenverhältnis zwischen 0,9 und 1, das heißt einem Diagonalenverhältnis von im wesentlichen 1 zu 1, ausgebildet sind. Bevorzugt ist die Ausbildung gemäß den Merkmalen von Anspruch 11.

Die Erfindung ist im folgenden anhand der in den Figuren 1 bis 8 dargestellten Ausführungsbeispiele näher erläutert.

Hierin zeigen:
- Figur 1: perspektivische Darstellung eines Reifens mit Lauffläche
- Figur 2: Ausführungsbeispiele eines erfindungsgemäßen Laufflächenprofils in Draufsicht unter schematischer Weglassung der Darstellung des Rillengrundes
- Figur 3: Vergrößerte Darstellung eines Rillenabschnittes in schematischer Darstellung in Draufsicht
- Figur 4: schematische vergrößerte Darstellung zweier jeweils außerhalb der zentralebene angeordneter Rillenbereiche
- Figur 5: Schnittdarstellung der Rille im Schnitt 5-5 von Figur 3
- Figur 6: Rillendarstellung im Schnitt 6-6 von Figur 2
- Figur 7: Alternative Schnittdarstellung mit gekrümmter Seitenwand
- Figur 8: schematische Darstellung von Blockelementen in Draufsicht zur Erläuterung der Diagonalenverhältnisse

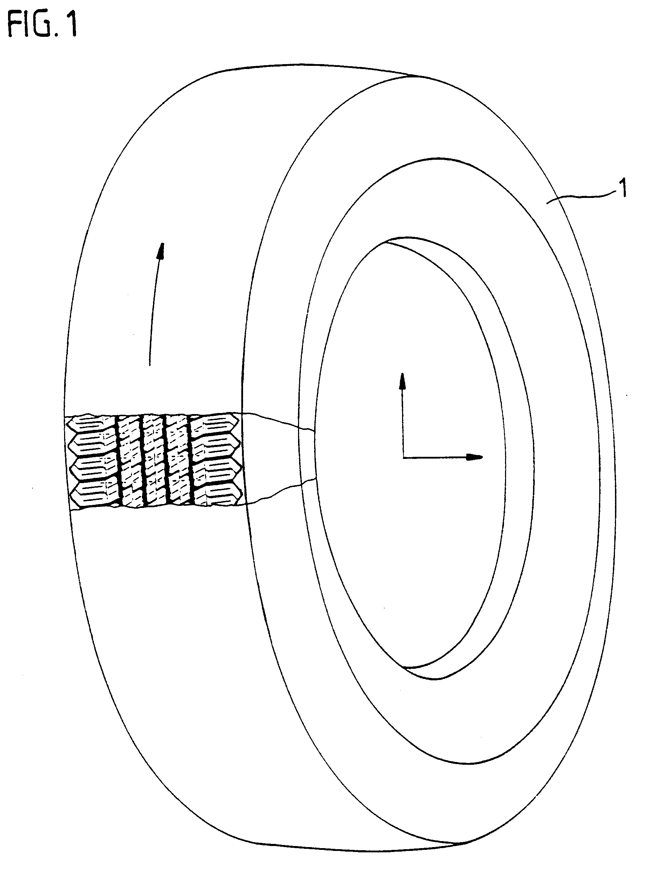

Figur 1 zeigt einen Fahrzeugluftreifen mit einer Lauffläche 1 in schematischer Darstellung. Der Fahrzeugluftreifen weist in bekannter Weise eine Reifenachse, die in Figur 1 durch den nach rechts weisenden Pfeil schematisch dargestellt ist, und von der die Radialen, von denen eine durch den nach oben weisenden geraden Pfeil angedeutet ist, radial nach außen reichen, auf. Die Umfangsrichtung ist durch den auf der Lauffläche eingetragenen Pfeil schematisch dargestellt.

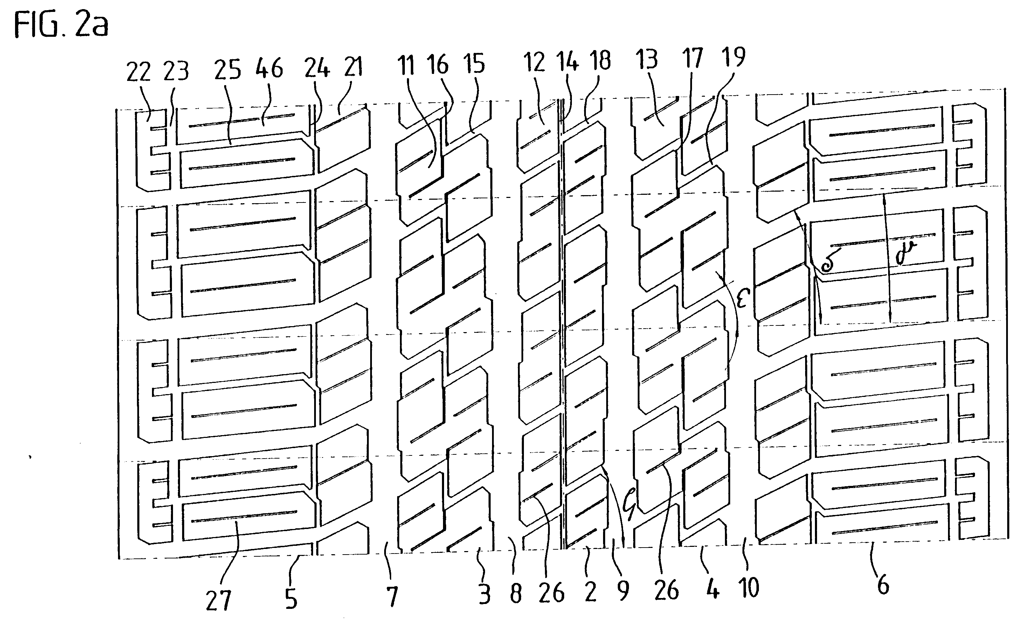

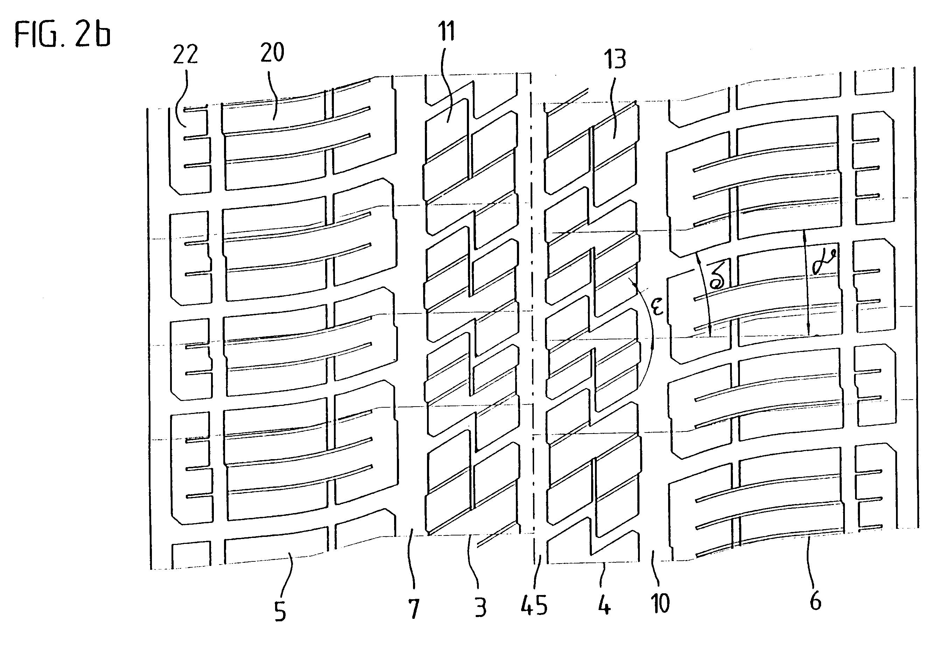

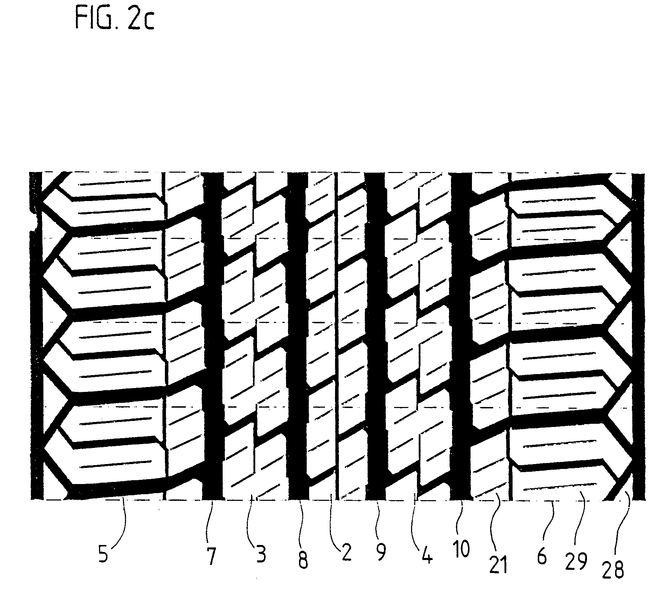

Die Figuren 2a bis 2c zeigen erfindungsgemäße Ausführungsbeispiele eines Laufflächenprofils in Draufsicht. Die Profile weisen in bekannter Weise Profilblockreihen 3 und 4 auf. Die Ausführungen von Figur 2a und 2c zeigen außerdem jeweils eine zusätzliche zentrale Profilblockreihe 2, die zwischen den beiden anderen Profilblockreihen 3, 4 in bekannter Weise angeordnet ist. In bekannter Weise ist das Laufflächenprofil axial außen beiderseits jeweils durch eine Schulterblockreihe 5 bzw. 6 begrenzt. Zwischen den Profilblockreihen 2, 3, 4 und zwischen den Profilblockreihen 3, 4 und den angrenzenden Schulterblockreihen 5, 6 ist jeweils eine Umfangsrille 7, 11, 10 in Figur 2b bzw. 7, 8, 9, 10 in den Figuren 2a und 2c vorgesehen, die jeweils zwei benachbarte Schulterprofilblockreihen bzw. eine Profilblockreihe und die benachbarte Schulterblockreihe voneinander trennen.

Die Profilblockreihen bestehen jeweils in bekannter Weise aus in Umfangsrichtung aneinandergereihten Profilblockelementen. Die Profilblockreihe 3 besteht aus Profilblockelementen 11, die Profilblockreihe 4 aus Profilblockelementen 13, die Profilblockreihe 2 aus den Profilblockelementen 12. Die benachbarten Profilblockelemente sind jeweils durch schmale Querrillen 15, 18, 19 voneinander getrennt. Die Schulterblockreihen sind ebenfalls in bekannter Weise aus benachbarten, durch Querrillen voneinander getrennten Schulterblöcken aufgebaut. Diese können beispielsweise, wie in Figur 2a dargestellt ist, aus mehreren in Achsrichtung nebeneinander angeordneten und durch schmale Umfangsrillen voneinander getrennten Schulterelementen 21, 46 und 22 aufgebaut sein, wobei zwischen den Elementen 21 und 22 zwei ähnliche Schulterblockelemente 46 angeordnet sind. Ebenso ist es denkbar, wie in Figur 2b dargestellt ist, in axialer Richtung nur zwei Schulterblockelemente nebeneinander anzuordnen, oder wie in Figur 2c dargestellt ist, das äußere Schulterblockelement 28 beispielsweise dreieckförmig auszubilden, wobei das mittlere Schulterblockelement 5 zwischen zwei dreiecksförmigen Schulterblockelementen 28 angeordnet ist. Die Schulterblockelemente können in bekannter Weise auch mit Einschnitten 27 ausgestaltet werden.

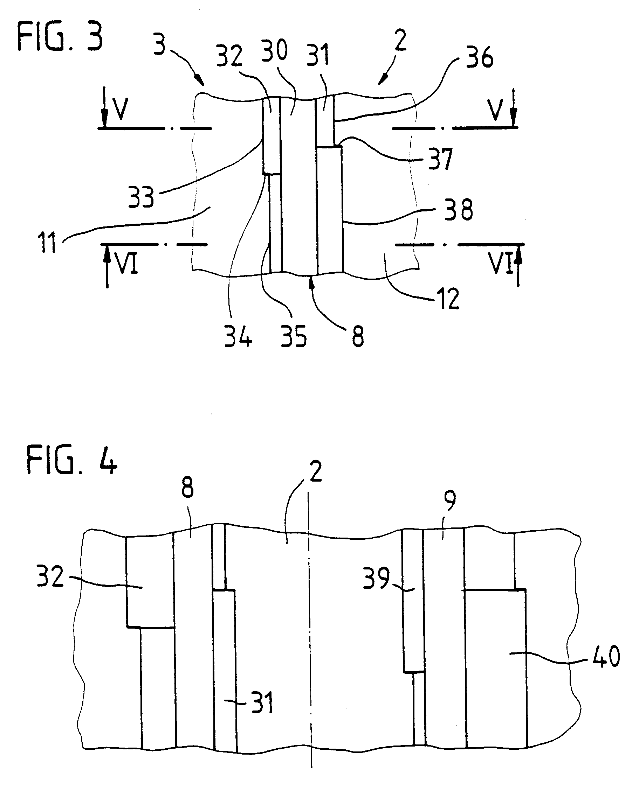

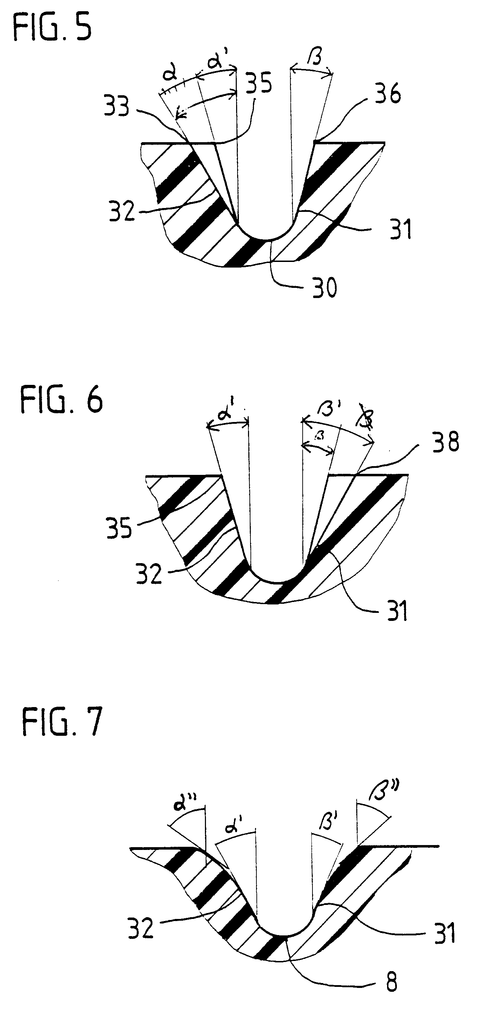

Die Umfangsrillen 7, 8, 9 und 10 sind, wie in Figur 3, 5 und 6 schematisch am Beispiel der Umfangsrille 8 in ausschnittsweiser Darstellung gezeigt ist, mit einem in Umfangsrichtung geradlinigen Rillengrund 30 ausgebildet, von dem sich seitlich unter Einschluß eines Winkels (α) zur Radialen eine Seitenwand 32, die das Profilelement 11 begrenzt, und nach der anderen Seite unter Einschluß eines Winkels (β)zur Radialen eine Seitenwand 31, die das Profilelement 12 begrenzt, radial nach außen erstrecken. Im Aufstandsflächenbereich des Profilblocks 11 bildet die Seitenwand 32 mit der nach radial außen weisenden Oberfläche des Profilblocks 11 in deren Schnittbereich eine Schnittkante 33, wie in den Figuren 3 und 5 zu erkennen ist. Die Schnittkante 33 verläuft in Umfangsrichtung bis sie einen axialen Versatz 34 bildet, bei dem die Kante entlang des Versatzabschnitts 34 axial verschoben und die Seitenwand 32 ihren Winkel α, den sie zur Radialen einschließt, verändert. Im Anschluß an den Versatz 34 nimmt die Seitenwand 32 einen Winkel α'' zur Radialen ein und die Schnittkante verläuft in ihrem Bereich 35 wiederum in Umfangsrichtung. Wie in den Figuren 2a bis 2c zu erkennen ist, in denen lediglich die Schnittkanten der Profilelementoberflächen mit den Umfangsrinnenseitenwänden dargestellt sind, und in denen aus Übersichtlichkeitsgründen auf die Darstellung des Rillengrundes verzichtet wurde, ist in häufigen, nicht regelmäßigen Abschnitten ein Achsversatz im wiederholten Wechsel nach axial innen und dann nach axial außen und somit eine wiederholte Vergrößerung oder Verkleinerung des Winkels α im Bereich zwischen 8° und 12° vorgesehen. Dabei ist es denkbar, die Versatzstellen 34 an den einzelnen Profilblöcken hinsichtlich der Position am Profilblock unterschiedlich zu wählen. Ebenso ist es denkbar, mehrere Versatzkanten im Bereich eines Profilblocks vorzusehen.

Wie in den Figuren 3, 5, 6 dargestellt ist, verläuft auch die zweite Seitenwand 31 unter einem Winkel (β) zur Radialen radial und axial vom Rillengrund der Rille 8 nach außen. Im Oberflächenbereich des Profilblocks 12 bildet sie mit der axial außen liegenden Oberfläche des Profilblocks 12 eine Schnittkante, die in der Schnittdarstellung von Figur 5 der Kante 36 bildet. Den Winkel (β) und den Umfangsverlauf der Schnittkante 36 behält die Seitenwand 31 in Umfangsrichtung bis zu einer Versetzungskante 37, bei der die Schnittkante in axialer Richtung seitlich unter Veränderung des Winkels (β) versetzt wird. Im Anschluß daran nimmt die Seitenwand 31 zur Radialen einen Winkel β' ein und bildet eine in Umfangsrichtung verlaufende Schnittkante 38 mit der Oberfläche des Profilblocks 12 ein, die sie bis zur nächsten, nicht dargestellten, Versetzungskante einnimmt.

Die Umfangsrillen 7, 8, 9, 10 weisen jeweils derartige Seitenwände auf, die in unregelmäßigen Abständen jeweils Versetzungskanten der Umfangsrillenseitenwände aufweisen, an denen die Umfangsrillenseitenwände ihren Winkel zur Radialen verändern.

Wie in den Figuren 2 dargestellt ist, ist es möglich, die Versetzungskanten einer jeden Seitenwand in möglichst unregelmäßigen Abständen vorzusehen und die Versetzungskanten der einzelnen Seitenwände zueinander sowie der einzelnen Rillen zueinander weitgehend nicht auf gleicher axialer Position anzuordnen.

Durch den geraden Rillenverlauf des Rillengrundes 8 kann das auftretende Wasser schnell auf direktem Wege abfließen. Die Versetzungskanten 34, 37 bilden zusätzliche Griffkanten zur Verbesserung der Traktion bei Schnee.

Es ist auch denkbar, die axial zur zentralen Äquatorebene des Reifens weisenden Seitenflächen 31 bzw. 39 an jeder Umfangsposition mit einem kleineren Winkel β zwischen 8° und 12° zur Radialen auszubilden als das Winkel α der axial von der zentralen Äquatorebene wegweisenden Seitenflächen 32, 40, wodurch eine zusätzliche Stabilität erreicht wird.

Wie in Figur 7 beispielhaft schematisch dargestellt ist, ist es auch denkbar, den Winkel α bzw. β der Seitenwände 32, 31 mit zunehmendem radialen Abstand zu vergrößern, sodaß die Seitenwände eine gewisse Krümmung mit einem Krümmungsradius im Bereich des zugeordneten Profilelements oder unterhalb des Profilelementes erfahren, wobei auch hier in Umfangsrichtung axiale Versetzungen und somit Winkelsprünge vorgesehen sind. Durch diese Krümmung der Seitenwand kann eine zusätzliche Stabilität der Profilblöcke erreicht werden.

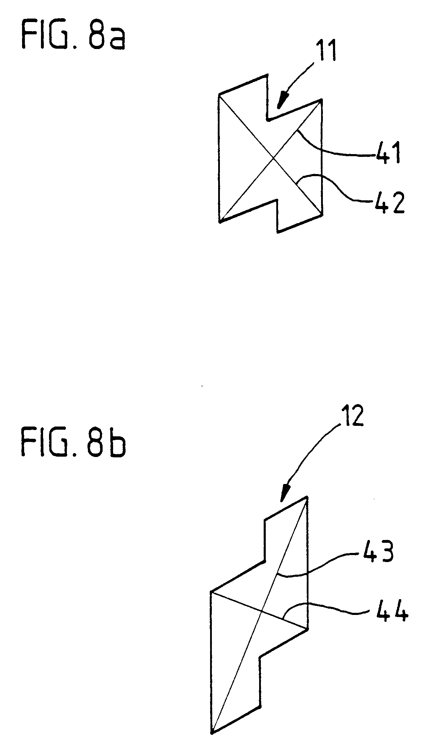

Die Profilblockelemente 11, 12, 13 können jeweils eine in axialer Richtung rechte und linke Hälfte aufweisen, die an einer Umfangslinie gegeneinander in Umfangsrichtung verschoben sind, wie dies in den Figuren 2 zu erkennen ist. Dabei kann die Umfangslinie im zentralen Profilband 2 durch eine schmale Umfangsrille 14 ausgebildet sein. Wie in den Figuren 8 dargestellt ist, weisen die Profilblockelemente Diagonalen in ihren Hauptstrukturrichtungen auf. Die Diagonalen der Profilblöcke 11 und 13 sind die Diagonalen 41 und 42, die des Profilblocks 12 die Diagonalen 43 und 44. Zur Erhöhung der Stabilität ist dabei denkbar, die Diagonalen 41 und 42 mit im wesentlichen gleicher Länge, mit einem Längenverhältnis zwischen 0,9 und 1 auszubilden, und die Diagonalen 43 und 44 in einem Längenverhältnis zwischen 0, 25 und 0,8 , bevorzugt 0,4 auszubilden. Dabei soll die längere Diagonale 43 mit der Umfangsrichtung einen Winkel zwischen 5° und 40°, bevorzugt 20° bis 30°, einnehmen.

### Bezugszeichenliste

- 1: Lauffläche
- 2: Profilblockreihe
- 3: Profilblockreihe
- 4: Profilblockreihe
- 5: Schulterblockreihe
- 6: Schulterblockreihe
- 7: Umfangsrille
- 8: Umfangsrille
- 9: Umfangsrille
- 10: Umfangsrille
- 11: Profilblock
- 12: Profilblock
- 13: Profilblock
- 14: Umfangsrille
- 15: Querrille
- 16: Umfangslinie
- 17: Umfangslinie
- 18: Querrille
- 19: Querrille
- 20: Schulterblockelement
- 21: Schulterblockelement
- 22: Schulterblockelement
- 23: Umfangsrille
- 24: Umfangsrille
- 25: Rille
- 26: Einschnitt
- 27: Einschnitt
- 28: Schulterblockelement
- 29: Schulterblockelement
- 30: Rillengrund
- 31: Seitenwand
- 32: Seitenwand
- 33: Kante
- 34: Versetzungskante
- 35: Kante
- 36: Kante
- 37: Versetzungskante
- 38: Kante
- 39: Seitenwand
- 40: Seitenwand
- 41: Diagonale
- 42: Diagonale
- 43: Diagonale
- 44: Diagonale
- 45: Umfangsrille
- 46: Schulterblockelement

## Patentansprüche

1. Laufflächenprofil eines Fahrzeugreifens
1.1 mit zumindest zwei benachbarten umfangsorientierten Profilblockreihen (2, 3, 4, 5, 6) von Profilblockelementen, die durch eine Umfangsrille (8, 9, 10, 7) voneinander getrennt sind,
1.2 wobei die Umfangsrille (8, 9, 10, 7) in ihrem Rillengrund (30) geradlinig parallel zur Umfangsrichtung verläuft und mit beidseitig des Rillengrundes (30) aus dem Rillengrund (30) radial nach außen weisenden Rillenwänden (31, 32, 39, 40) ausgebildet ist, die jeweils die zur Umfangsrille (7, 8, 9, 10)weisende Seitenwand der angrenzenden Profilblockreihe (2, 3, 4, 5, 6)bilden,
1.3 wobei jeweils die zur Umfangsrille (7, 8, 9, 10) weisenden Seitenwände der Profilblockelemente im radial äußeren Endbereich im wesentlichen in Umfangsrichtung ausgerichtet sind, dadurch gekennzeichnet,
1.4 dass die Kontur einer Seitenwand (31, 32) einer Rille (8) in jeder die Reifenachse beinhaltenden Schnittebene sich mit zunehmendem Radius axial vom Rillengrund (30) weiter entfernt und dabei einen Winkel (alpha, beta) mit der entsprechenden Radialen des Reifens einschließt, wobei der Winkel (alpha, beta) im Bereich zwischen 5° und 15°, bevorzugt zwischen 8° und 12°, liegt,
1.5 wobei jeweils die zur Umfangsrille weisende Seitenwand der Profilblockelemente mit der nach radial außen weisenden Oberfläche des jeweiligen Profilblockelements eine Schnittkante (33, 35, 36, 38) bildet, und wobei die Schnittkante (33, 35, 36, 38) bis zu einem axialen Versatz (34, 37) in Umfangsrichtung ausgerichtet, an der Stelle des axialen Versatzes (34, 37) axial verschoben und im Anschluß an den axialen Versatz (34, 37) wiederum in Umfangsrichtung ausgerichtet ist.

2. Laufflächenprofil eines Fahrzeugreifens gemäß den Merkmalen von Anspruch 1,
- wobei die Schnittkante jedes Profilblockelements von einer der beiden Seitenwände (31, 32, 39, 40) der Umfangsrille (8, 9, 10, 7) eine oder mehrere axiale Versetzungen (34, 37) aufweist.

3. Laufflächenprofil eines Fahrzeugreifens gemäß den Merkmalen der Ansprüche 1 oder 2,
- wobei die Schnittkanten der Profilblockelemente von beiden Seitenwänden der Umfangsrille (7, 8, 9, 10) jeweils eine oder mehrere Versetzungen aufweisen, wobei die Versetzungen (34, 37) der Schnittkanten der Profilblockelemente der beiden Seitenwände zumindest teilweise zueinander in Umfangsrichtung phasenversetzt sind.

4. Laufflächenprofil eines Fahrzeugreifens gemäß den Merkmalen von einem oder mehreren der Ansprüche 1 bis 3,
- wobei zumindest zu einer Blockreihe (2, 3, 4, 5, 6) axial beiderseits eine derartige Umfangsrille (8, 9, 10) ausgebildet ist.

5. Laufflächenprofil eines Fahrzeugreifens gemäß den Merkmalen von Anspruch 4,
- wobei die Versetzungen der die Blockreihe (2, 3, 4, 5, 6) axial begrenzenden Seitenwände zumindest teilweise zueinander in Umfangsrichtung phasenversetzt vorliegen.

6. Laufflächenprofil eines Fahrzeugreifens gemäß den Merkmalen von einem oder mehreren der vorangegangenen Ansprüche,
- wobei beide Seitenwände in den Schnittebenen vom Rillengrund radial und axial nach außen wegweisend verlaufend ausgebildet sind und beide Seitenwände jeweils zur entsprechenden Radialen des Reifens einen Winkel (alpha, beta) einschließen, wobei (alpha) und (beta) zwischen 5° und 15°, bevorzugt zwischen 8 und 12°, liegen.

7. Laufflächenprofil eines Fahrzeugreifens gemäß den Merkmalen von Anspruch 6,
- wobei zumindest eine Umfangsrille (8) axial außerhalb der Äquatorebene vorgesehen ist, deren axial von der Äquatorebene weiter beabstandete Seitenwand (32) einen Winkel (alpha) zur entsprechenden Radialen des Reifens einnimmt, der größer ist als der entsprechende Winkel (beta), den die näher zur Äquatorebene weisende Seitenwand (31) in der entsprechenden Schnittebene mit der Radialen einschließt.

8. Laufflächenprofil eines Fahrzeugreifens gemäß den Merkmalen von Anspruch 7,
- wobei der Winkel (alpha, beta) einer Seitenwand (31, 32) zumindest in Teilbereichen des Reifenumfangs mit zunehmendem Radius zunimmt.

9. Laufflächenprofil eines Fahrzeugreifens gemäß den Merkmalen von einem oder mehreren der Ansprüche 1 bis 8,
- wobei zumindest eine Blockreihe aus Profilblockelementen (11) aufgebaut ist, die in ihrer Oberfläche zwei diagonale Hauptstrukturachsen (41, 42) mit einem Längenverhältnis der Diagonalen zwischen 0,8 und 1, bevorzugt 0,9 und 1 aufweisen.

10. Laufflächenprofil eines Fahrzeugreifens gemäß den Merkmalen von Anspruch 9,
- mit zumindest zwei Blockreihen mit Profilblockelementen (11), deren Diagonalen (41, 42) jeweils im wesentlichen gleich lang sind,
- wobei zwischen zwei Blockreihen eine zentrale Mittenblockreihe mit Profilblockelementen (12), deren Diagonalen (43, 44) jeweils ein Längenverhältnis zwischen 0,25 und 0,8, bevorzugt im wesentlichen 0,4, aufweist, angeordnet ist,
- wobei die längere Hauptstrukturachse (43) mit der Umfangsrichtung des Reifens einen Winkel einschließt, der kleiner als 45° ist, bevorzugt 20° bis 30°, einschließt.

11. Laufflächenprofil eines Fahrzeugreifens gemäß den Merkmalen von Anspruch 9 oder 10,
- wobei die Profilblockelemente (12) in Reifenachsrichtung jeweils einen rechten und einen linken Teil aufweisen, die durch die Umfangslinie (14), die mittig durch die zugeordnete Profilblockreihe (2) reicht, getrennt sind und die in Umfangsrichtung entlang dieser Umfangslinie zueinander phasenversetzt sind.

## Claims

1. Tread surface profile of a vehicle tyre,
1.1 having at least two adjacent, circumferentially orientated rows of profile blocks (2, 3, 4, 5, 6) of profile block elements, which are separated from one another by a circumferential groove (8, 9, 10, 7),
1.2 wherein the circumferential groove (8, 9, 10, 7) extends in respect of its groove base (30) in a straight line parallel to the circumferential direction and is provided with groove walls (31, 32, 39, 40) which extend radially outwardly from the groove base (30) on both sides of the groove base (30), said groove walls each forming the lateral wall of the adjacent row of profile blocks (2, 3, 4, 5, 6), which lateral wall extends to the circumferential groove (7, 8, 9, 10),
1.3 wherein the lateral walls of the profile block elements extending to the circumferential groove (7, 8, 9, 10), are each substantially aligned in the radially outer end region when viewed with respect to the circumferential direction, characterised in
1.4 that the configuration of a lateral wall (31, 32) of one groove (8) in each sectional plane containing the tyre axis is axially further removed from the groove base (30) with an increasing radius and thereby forms an angle (alpha, beta) with the corresponding radial of the tyre, the angle (alpha, beta) lying in the range between 5° and 15°, preferably between 8° and 12°,
1.5 wherein each lateral wall of the profile block elements extending to the circumferential groove forms a cut edge (33, 35, 36, 38) with the radially outwardly extending surface of the respective profile block element, and wherein the cut edge (33, 35, 36, 38) is aligned as far as an axially offset arrangement (34, 37) when viewed with respect to the circumferential direction, is axially displaced at the location of the axial offset arrangement (34, 37) and is, in turn, aligned with respect to the circumferential direction subsequent to the axial offset arrangement (34, 37).

2. Tread surface profile of a vehicle tyre according to the features of claim 1,
- wherein the cut edge of each profile block element of one of the two lateral walls (31, 32, 39, 40) of the circumferential groove (8, 9, 10, 7) has one or more axial offset arrangements (34, 37).

3. Tread surface profile of a vehicle tyre according to the features of claim 1 or 2,
- wherein the cut edges of the profile block elements of both lateral walls of the circumferential groove (7, 8, 9, 10) each have one or more offset arrangements, the offset arrangements (34, 37) of the cut edges of the profile block elements of the two lateral walls being at least partially out-of-phase relative to one another when viewed with respect to the circumferential direction.

4. Tread surface profile of a vehicle tyre according to the features of one or more of claims 1 to 3,
- wherein such a circumferential groove (8, 9, 10) is provided axially on both sides at least relative to one row of blocks (2, 3, 4, 5, 6).

5. Tread surface profile of a vehicle tyre according to the features of claim 4,
- wherein the offset arrangements of the lateral walls, which axially define the row of blocks (2, 3, 4, 5, 6), are at least partially out-of-phase relative to one another when viewed with respect to the circumferential direction.

6. Tread surface profile of a vehicle tyre according to the features of one or more of the preceding claims,
- wherein both lateral walls are provided in the sectional planes so as to extend away from the groove base radially and axially outwardly, and both lateral walls each form an angle (alpha, beta) relative to the corresponding radial of the tyre, (alpha) and (beta) lying between 5° and 15°, preferably between 8° and 12°.

7. Tread surface profile of a vehicle tyre according to the features of claim 6,
- wherein at least one circumferential groove (8) is provided axially externally of the equatorial plane, the lateral wall (32) of said groove, which is spaced further axially from the equatorial plane, assuming an angle (alpha) relative to the corresponding radial of the tyre, which angle is greater than the corresponding angle (beta), which the lateral wall (31), which extends more closely to the equatorial plane, forms in the corresponding sectional plane with the radial.

8. Tread surface profile of a vehicle tyre according to the features of claim 7,
- wherein the angle (alpha, beta) of a lateral wall (31, 32) increases with an increasing radius, at least in partial regions of the tyre circumference.

9. Tread surface profile of a vehicle tyre according to the features of one or more of claims 1 to 8,
- wherein at least one row of blocks is made-up of profile block elements (11), which have in their surface two diagonal main structural axes (41, 42) with a length ratio of the diagonals between 0.8 and 1, preferably 0.9 and 1.

10. Tread surface profile of a vehicle tyre according to the features of claim 9,
- having at least two rows of blocks comprising profile block elements (11), the diagonals (41, 42) of which each have substantially the same length,
- wherein a central row of centre blocks, comprising profile block elements (12), is disposed between two rows of blocks, the diagonals (43, 44) of which central row has a length ratio between 0.25 and 0.8, preferably substantially 0.4, and
- wherein the longer main strural axis (43) forms, with the circumferential direction of the tyre, an angle which is smaller than 45°, preferably 20° to 30°.

11. Tread surface profile of a vehicle tyre according to the features of claim 9 or 10,
- wherein the profile block elements (12), when viewed with respect to the axial direction of the tyre, each have a right-hand portion and a left-hand portion, said portions being separated by the circumferential line (14), which extends centrally through the associated row of profile blocks (2), and said portions, when viewed with respect to the circumferential direction, being out-of-phase relative to each other along this circumferential line.

## Revendications

1. Profil de bande de roulement d'un pneumatique de véhicule
1.1 présentant au moins deux' rangées voisines (2, 3, 4, 5, 6), orientées selon la périphérie, d'éléments imbriqués du profil qui sont séparés l'un de l'autre par une cannelure périphérique (8, 9, 10, 7),
1.2 dans lequel la rainure périphérique (8, 9, 10, 7) est orientée, par son fond de rainure (30), en ligne droite et parallèlement à la direction périphérique et est conçue avec des parois de cannelure (31, 32, 39, 40) qui, des deux côtés du fond de cannelure (30), à partir du fond de rainure (30), sont orientées radialement vers l'extérieur et forment chacune la paroi latérale, orientée vers la cannelure périphérique (7, 8, 9, 10), de la rangée d'éléments imbriqués du profil (2, 3, 4, 5, 6) voisine,
1.3 dans lequel les parois latérales, orientées vers la cannelure périphérique (7, 8, 9, 10), des éléments imbriqués du profil sont, chacune, en ce qui concerne leur zone d'extrémité radialement extérieure, essentiellement orientées selon la direction périphérique,
caractérisé par le fait
1.4 que, dans chaque plan de coupe passant par l'axe du pneumatique, le contour d'une paroi latérale (31,32) d'une cannelure (8) s'écarte davantage du fond de cannelure (30), selon la direction axiale, lorsque le rayon croît et y fait, avec le rayon correspondant du pneumatique, un angle (alpha, béta), l'angle (alpha, béta) valant entre 5° et 15°, de préférence entre 8° et 12°,
1.5 dans lequel chacune des parois latérales, orientée vers la cannelure périphérique, des éléments imbriqués du profil forme, avec' la surface, orientée radialement vers l'extérieur, de l'élément imbriqué correspondant du profil, une arête de coupe (33, 35, 36, 38), et dans lequel l'arête de coupe (33, 35, 36, 38) est orientée selon la direction périphérique jusqu'à un décalage selon la direction axiale (34, 37), est décalée selon la direction axiale à l'endroit du décalage axial (34, 37) puis, à la suite du décalage axial (34, 37), est à nouveau orientée selon la direction périphérique.

2. Profil de bande de roulement d'un pneumatique de véhicule selon les caractéristiques de la revendication 1,
- dans lequel l'arête de coupe de chaque élément imbriqué du profil présente, à partir de l'une des deux parois latérales (31, 32, 39, 40) de la cannelure périphérique (8, 9, 10, 7), un ou plusieurs décalages selon la direction axiale (34, 37).

3. Profil de bande de roulement d'un pneumatique de véhicule selon les caractéristiques des revendications 1 ou 2,
- dans lequel, à partir des deux parois latérales de la cannelure périphérique (7, 8,9, 10), les arêtes de coupe des éléments imbriqués du profil présentent chacune un ou plusieurs décalages, les décalages (34, 37) des arêtes de coupe des éléments imbriqués du profil des deux parois latérales étant, au moins partiellement, décalés en phase l'un par rapport à l'autre selon la direction périphérique.

4. Profil de bande de roulement d'un pneumatique de véhicule selon les caractéristiques de l'une, ou de plusieurs, des revendications 1 à 3,
- dans lequel une telle cannelure périphérique (8, 9, 10) est prévue des deux côtés, selon la direction axiale, d'au moins une rangée d'élément imbriqués (2, 3, 4, 5, 6).

5. Profil de bande de roulement d'un pneumatique de véhicule selon les caractéristiques de la revendication 4,
- dans lequel les décalages des parois latérales limitant, selon la direction axiale, la rangée d'éléments imbriqués (2, 3, 4, 5, 6) sont, au moins partiellement, décalés en phase l'un par rapport à l'autre selon la direction périphérique.

6. Profil de bande de roulement d'un pneumatique de véhicule selon les caractéristiques de l'une, ou de plusieurs, des revendications précédentes,
- dans lequel, dans les plans de coupe, les deux parois latérales sont prévues s'écartant du fond de la rainure selon la direction radiale et vers l'extérieur selon la direction axiale et les deux parois latérales font chacune avec le rayon correspondant du pneumatique un angle (alpha, béta), les angles (alpha) et (béta) valant entre 5° et 15°; de préférence entre 8° et 12°.

7. Profil de bande de roulement d'un pneumatique de véhicule selon les caractéristiques de la revendication 6,
- dans lequel, est prévue, à l'extérieur du plan équatorial selon la direction axiale, au moins une cannelure périphérique (8) dont la paroi latérale (32) la plus éloignée du plan équatorial selon la direction axiale, fait, avec le rayon correspondant du pneumatique, un angle (alpha) qui est supérieur à l'angle correspondant (béta) que fait avec le rayon, dans le plan de coupe correspondant, la paroi latérale (31) plus proche du plan équatorial.

8. Profil de bande de roulement d'un pneumatique de véhicule selon les caractéristiques de la revendication 7,
- dans lequel, au moins dans des zones partielles de la périphérie du pneumatique, l'angle (alpha, béta) d'une paroi latérale (31, 32) croît avec un rayon croissant.

9. Profil de bande de roulement d'un pneumatique de véhicule selon les caractéristiques de l'une, ou de plusieurs, des revendications 1 à 8,
- dans lequel, au moins une rangée est constituée d'éléments imbriqués du profil (11) qui, en surface, présentent deux diagonales principales de la structure (41, 42) d'un rapport de longueur des diagonales valant entre 0,8 et 1, de préférence entre 0,9 et 1.

10. Profil de bande de roulement d'un pneumatique de véhicule selon les caractéristiques de la revendication 9,
- présentant au moins deux rangées comportant des éléments imbriqués du profil (11) dont les diagonales (41, 42) sont sensiblement chacune de même longueur,
- dans lequel, entre deux rangées d'éléments imbriqués du profil, est disposée une rangée médiane centrale comportant des éléments imbriqués du profil (12) dont les diagonales (43, 44) présentent un rapport de longueur valant entre 0,25 et 0,8, de préférence sensiblement 0,4.
- dans lequel la diagonale la plus longue (43) de la structure fait, avec la direction périphérique du pneumatique, un angle qui est inférieur à 45°, et vaut de préférence de 20 à 30°.

11. Profil de bande de roulement d'un pneumatique de véhicule selon les caractéristiques de la revendication 9 ou 10,
- dans lequel, les éléments imbriqués du profil (12) présentent chacun, selon la direction axiale du pneumatique, une partie gauche et une partie droite qui sont séparées par la ligne périphérique (14) qui passe dans l'axe de la rangée correspondante (2) d'éléments imbriqués du profil et qui sont décalées en phase l'une par rapport à l'autre selon la direction périphérique, le long de cette ligne périphérique.
